Europäisches Patentamt

European Patent Office

Office européen des brevets

(11) Publication number: 0 615 150 A2

# EUROPEAN PATENT APPLICATION

(21) Application number: 94102567.8

(22) Date of filing: 21.02.94

(51) Int. Cl.5: G02F 1/1335, G02B 3/00

(30) Priority: 08.03.93 US 27412

(43) Date of publication of application:
14.09.94 Bulletin 94/37

(84) Designated Contracting States:
DE FR GB NL

(71) Applicant: CORNING INCORPORATED
Houghton Park
Corning New York 14831 (US)

(72) Inventor: Borrelli, Nicholas Francis, Corning
Incorporated
Patent Department,
SP FR 02-12
Corning, NY 14831 (US)
Inventor: Trotter Jr.,Donald McLean, Corning
Incorporated
Patent Department,
SP FR 02-12
Corning, NY 14831 (US)
Inventor: Fehlner, Francis Paul, Corning
Incorporated
Patent Department,
SP FR 02-12
Corning, NY 14831 (US)

(74) Representative: Boon, Graham Anthony et al
Elkington and Fife
Beacon House,
113 Kingsway
London WC2B 6PP (GB)

(54) Cover glass for LCD panel.

(57) An integral cover glass for an LCD panel having an array of microlenses integral with the outside of its front face, whereby light is focused by each microlens to enhance light output from the panel. The microlens array may be a pattern of diffractive gratings; an array of spherical shaped surfaces developed on a glass substrate; or an array of microlenses formed by ion exchange in a glass to provide a gradient refractive index in the glass.

Fig. 1

The invention relates to a cover glass for a liquid crystal display (LCD) panel embodying an array of microlenses, of particular use in TV applications.

Lens arrays, composed of a pattern of lenses formed on a surface of a substrate, are well known. An early technique for forming such an array involved forming a spherical surface on one end of each of a plurality of rods. The rods were then combined as by bundling and fusion sealing.

More refined and versatile procedures are disclosed in United States Patents 4,572,611 and 4,952,026.

Microlens arrays may also be made by developing a gradient refractive index (GRIN) in a glass body through ion exchange, as in United States Patent Nos. 3,658,407 and 3,667,832, or by impregnating a porous glass body with a photolyzable, organometallic compound and then exposing the impregnated body to photolyzing light, see United states Patent No. 4,501,468.

It has been proposed to utilize a planar microlens array, such as described above, in conjunction with an LCD panel. The combination enhances the brightness of an LCD TV projector, but requires considerable care in aligning the lens array with the pixel array of the panel. Further, separate elements must be fabricated and processed.

"Binary Optics", by Veldkamp and McHugh, Scientific American, May 1992, pages 92-97, describes a technique of etching desired optical shapes, in particular, diffractive lenses, into the surface of an optical material by masking and etching techniques developed for producing microcircuitry on silicon chips; "Fabrication of Micro Lenses Using Electron-Beam Lithography" by Fujita et al., OPTICS LETTERS, Vol. 6, No. 12, pp. 613-615, describes a technique for producing micro Fresnel lenses that employs electron-beam lithography.

Basic purposes of our invention are to produce an improved cover glass for an LCD panel that embodies a microlens array, to simplify the alignment problems heretofore encountered, and to provide an LCD TV projector having enhanced brightness.

SUMMARY OF THE INVENTION

Our invention resides in an integral cover glass for an LCD panel having an array of microlenses integral with the outside of its front face, whereby light is focused by each microlens to enhance light output from the respective pixel with which it is aligned in the panel. In one embodiment, the array of microlenses is composed of either diffractive gratings or spherical-shaped surfaces. In another embodiment, the cover glass is capable of being treated to form a microlens array on its outer face.

BRIEF DESCRIPTION OF THE DRAWINGS

FIGURE 1 is a schematic side view illustrating the elements in a typical LCD panel.

FIGURE 2 is a schematic side view of the LCD panel of FIGURE 1 associated with a lens array.

FIGURE 3 is a schematic side view of a single pixel in an LCD panel illustrating the present invention.

FIGURES 4A, 4B and 4C are views in cross-section that illustrate the evolutionary development of a diffraction grating microlens for use in accordance with the invention.

FIGURE 5 is a front view of a cover glass for a single pixel illustrating an alternative form of the invention.

FIGURE 6 is a cross-section view along line 6-6 on FIGURE 5.

FIGURE 7 is a view in cross-section of a fragment of FIGURE 6 showing a groove further modified.

DESCRIPTION OF THE INVENTION

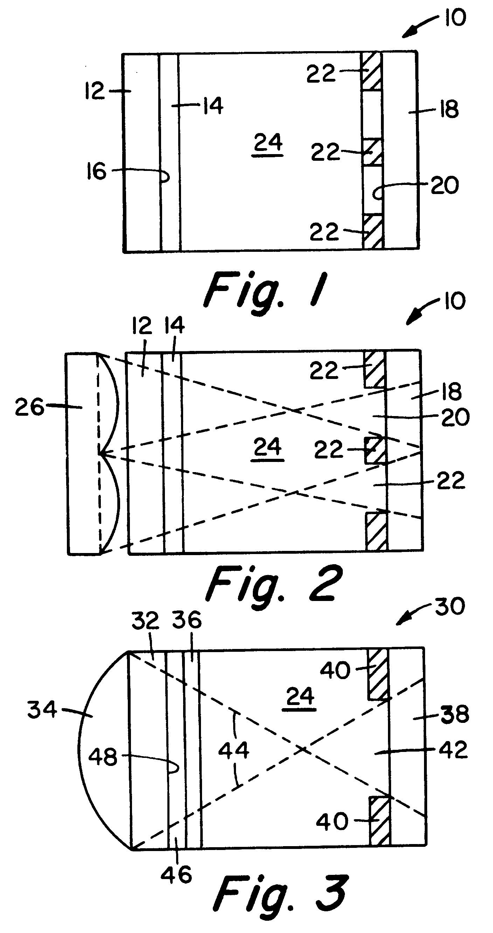

FIGURE 1 in the accompanying drawing is a schematic side view illustrating the elements in panel 10 for an LCD TV projector. Panel 10 comprises a first cover glass 12 positioned to receive light from a light source (not shown). Cover glass 12 typically has an electroconductive film 14 applied to its inside face 16. Film 14 may be a transparent conductor, for example, an indium oxide film doped with tin oxide (ITO). Film 14 may be continuous, or patterned.

Panel 10 further comprises a second cover glass 18 on the inside face 20 of which is formed an x-y matrix of conducting lines. Transistors are placed at the intersections of said lines to form an array of transistors 22. Transistors 22 may, for example, be either amorphous silicon or polycrystalline silicon, as used in active matrix LCD devices (AMLCDs). The amorphous silicon transistor requires a maximum processing temperature of 350-400°C, whereas the polycrystalline transistor requires a maximum processing temperature in the range of 600-650°C.

Intermediate cover glasses 12 and 18, and confined within the panel, is a liquid crystal material 24. The compositions of suitable materials are well known and form no part of this invention.

Transistors 22 and associated conductor lines occupy a substantial portion of the area on the face of cover glass 18. The amount is dependent on pixel size, and commonly amounts to 50-60% of the total area. Since both the transistors and the lines are essentially opaque, they necessarily limit the amount of light that can be transmitted by panel 10. It is important, then, to enhance the amount of light transmitted through the open areas to the extent possible.

This has led to utilizing lens arrays to focus light on the open areas. Heretofore, such lens arrays have been used as separate optical elements. FIGURE 2 is a schematic side view showing a typical arrangement in which a lens array 26 is mounted adjacent to the front face of cover glass 12 of panel 10. The need for precise alignment of the lens array 26 with the open areas on cover glass 18 is readily apparent.

The present invention eliminates the step of assembling the microlens array and the front cover by combining the lens array and the front cover glass of a panel into an integral body. The microlens array and the pixels must still be aligned, but this becomes part of the process of joining cover glasses 12 and 18 together. It avoids the separate step required in the FIGURE 2 assembly. Further, it brings the microlens array as close as possible to the pixels.

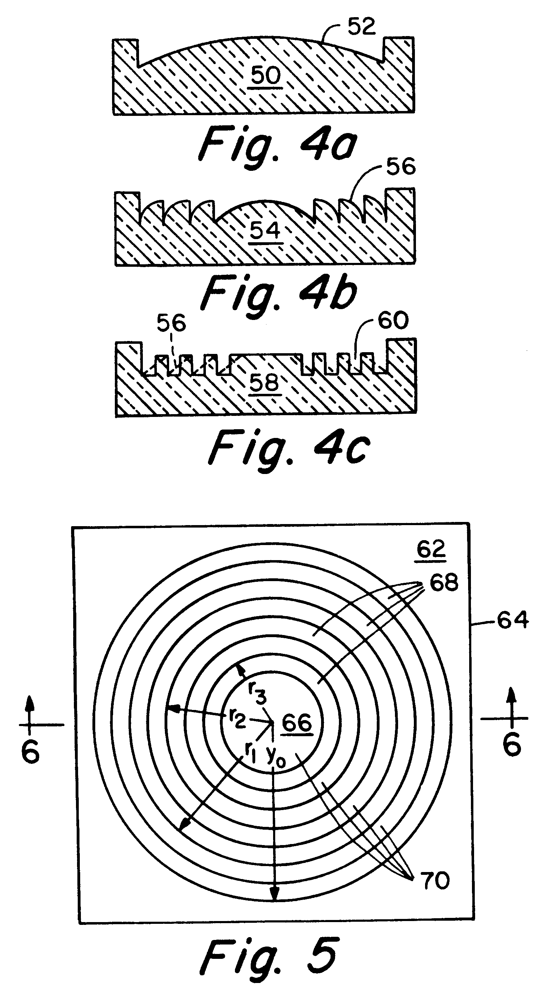

This is illustrated in FIGURE 3, a schematic side view of a single pixel in an LCD panel. The view is greatly exaggerated for illustration purposes. It will be appreciated that a typical panel may contain thousands of pixels. The microlens diameter may be on the order of 50-200 microns, consistent with the pixel size.

FIGURE 3 shows a single pixel 30. Pixel 30 has a front cover glass 32 on the front face of which is formed one microlens 34 of a lens array. An electroconductive film 36 is applied, either directly to the inside face 48 of cover glass 32, or over a barrier layer 46 deposited on inside face 48. As in FIGURE 1, back cover glass 38 has transistors 40 formed thereon. This leaves open area 42 through which light may be transmitted.

FIGURE 3 further illustrates the manner in which light is focused in accordance with the invention. Thus, light rays 44 are focused on open area 42 thereby enhancing the light available for open area 42.

A microlens array, as shown in FIGURE 3, may be produced on any glass having a lens forming capability. This may be a photosensitive glass as described in the Bellman et al. patents -611 and -026 mentioned earlier. Alternatively, such a microlens array may be produced by the ion exchange technique for producing a gradient refractive index in an ion exchangeable glass.

Glasses known to have lens forming capabilities also may contain substantial quantities of alkali metal oxides. Thus, photosensitive glasses, as well as glasses used to form a microlens array by ion exchange, may contain amounts of alkali metal oxide up to as much as 20% by weight. Migration of the alkali metal ions from the glass tends to occur during the heat treatment required to apply transparent electroconductive film 36. Typical heat treatment conditions to produce an ITO film are 300°C for one hour. The entry of such migrating alkali metal ions is detrimental to both film 36 and the liquid crystal material 24. To avoid this alkali ion migration, we apply a barrier layer 46 intermediate film 36 and the inside face 48 of front cover glass 32.

This barrier layer, of the order of 100 nm thick, may be chosen from transparent, colorless, refractory film materials, such as, silica, alumina, or silicon nitride. These and others are disclosed, for example, in pending application S.N. 07/853,587, filed March 18, 1992 in the name of F. P. Fehlner.

Methods for applying barrier films to surface 48 of cover glass 32 may be divided into two classes; chemical vapor deposition (CVD) and physical vapor deposition (PVD). Good quality barriers require a substrate temperature of 50°-600°C dependent upon the deposition process used. Higher temperatures give more dense films and hence better barriers.

Glasses which contain, for instance, 10-20% by weight of alkali metal oxides, e.g., soda lime glass, have strain points around 500°C. To avoid distortion of the glass and hence the multilens array, it is desirable to deposit films at temperatures 25°C below the strain point. Hence, any deposition process temperature should be less than 475°C. PVD processes such as sputter deposition readily fall into this category. Plasma enhanced CVD processes also have deposition temperatures in this range while low pressure and atmospheric pressure CVD are best done at 400° to 600°C.

The effectiveness of a barrier layer in controlling the movement of sodium out of a soda lime glass into a barrier layer of PVD silica was measured using secondary ion mass spectroscopy (SIMS). Samples of Corning Code 0215 glass, which contained 14% by weight $Na_2O$, were coated with 100 nm of reactively sputtered silica. Substrate temperature was approximately 50°C. One of the samples was heat treated in wet air for 25 hours at 350°C. This sample, plus a control sample which had not been heat treated, were examined using SIMS. The barrier layers were profiled in depth. Ion counts for sodium and silicon were determined and the ratio of the two calculated. A comparison of the ratios for the control and heat treated samples showed that the barrier surface concentration of sodium had increased by a factor of 1.6 during the heat treatment. This is not considered significant for the present application since: 1) the time and temperature of heat treatment are far greater than those needed to treat a transparent conductor such as ITO, and 2) the initial $Na_2O$ concentration at the barrier surface was less than 0.01% by weight so that a 1.6 times increase would still be below 0.1% by weight $Na_2O$. Glasses containing this much $Na_2O$, e.g., Corning Code 7059 glass, are routinely used with no barrier layer as a substrate for ITO films. This ITO coated glass in turn is used in liquid crystal displays.

In current AMLCD color filter fabrication, the problem of alkali metal ion migration from the front cover glass is avoided by using a glass that is essentially free of alkali metal ions. Such a glass is Code 7059 glass, available from Corning Incorporated. This glass contains no more than about 0.1% alkali metal oxide in its composition. Other suitable glasses are disclosed, for example, in United States Patent No. 4,824,808 (Dumbaugh, Jr.).

Such low-alkali glasses do not have the inherent capability of forming an array of microlenses. However, such glasses may be employed in the present invention by forming an array of diffraction grating microlenses on their surface. The method is to use a diffraction grating to focus the light.

The wavefront produced by a spherical surface is expressed as,

$$\phi = \left(\frac{2\pi}{\lambda}\right)\left(\frac{r^2}{2f}\right)$$

where $\phi$ represents the phase as a function of the radial distance r away from the axis and f is the desired focal length of the lens at wavelength $\lambda$. The wavelength is chosen to match the color to be transmitted by the pixel with which the lens is registered.

FIGURE 4A, a view in cross-section, illustrates an idealized microlens 50. This microlens would have a surface 52 adapted to produce a wavefront corresponding to the formula. However, such a lens surface is impractical to produce.

The ideal wavefront could also be achieved with a Fresnel-type microlens. Such a lens is illustrated in FIGURE 4B, a view in cross-section, of an idealized, Fresnel-type microlens 54 having a typical Fresnel lens structure 56. Again this is impractical to produce.

It does, however, furnish the basis for designing a diffraction grating structure that can be constructed. Further, this structure can provide a useful approximation to the desired wavefront.

FIGURE 4C, a view in cross-section, shows a microlens 58 with a single-step diffraction grating 60. FIGURE 4C also shows, in dashed lines, the Fresnel lens surface 56 that is collapsed to form diffraction grating 60.

The evolutionary design development just described is conducted in accordance with a practice known as binary optics. This is further illustrated in FIGURES 5, 6 and 7 described hereafter. Reference is also made to the Veldkamp and McHugh publication.

In designing the grating structure, a wavelength step is chosen as one wave, or some fraction k of a wave. The radii of the rings of the grating are calculated starting from the outside from the equation,

$$r_o^2 - r_i^2 = 2f\lambda k$$

and iterating each step in a similar manner,

$$r_i^2 - r_{i-1}^2 = 2f\lambda k$$

The depth of the step is $k\lambda/(n-1)$, where n is the refractive index of the glass.

As an example, for $r_0 = 75\mu m$, $f = 1500\mu m$, $k = 1$, and $\lambda = 0.5\mu m$, the radii corresponding to each $1\mu m$ deep step would be,

$r_0 = 75\mu m$
$r_1 = 64.2$
$r_2 = 51.2$
$r_3 = 33.5$

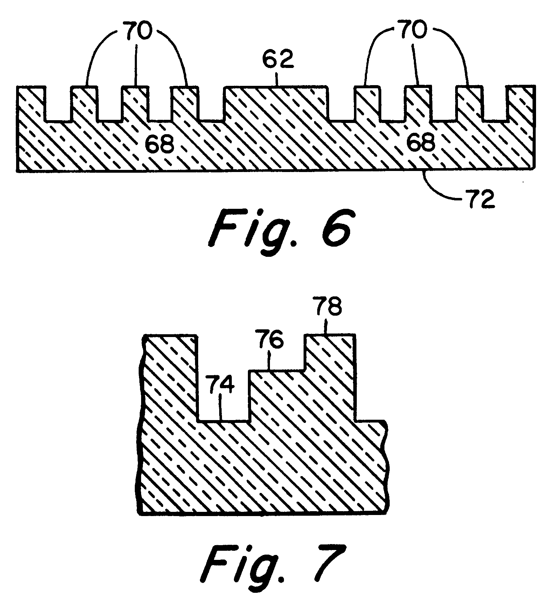

This example is illustrated in, and furnishes the basis for, FIGURES 5-7. FIGURE 5 is a top plan view of an outer, plano face 62 on a front cover glass 64 showing a diffraction grating pattern 66 etched in plano surface 62. Each grating pattern 66 is composed of successive, spaced, annular surfaces 68 separated by annular elevations 70. The depth and arrangement of surfaces 68 and elevations 70 are indicated in FIGURE 6, a view in cross-section along mid-line 6-6 on FIGURE 5. Diffraction grating pattern 66 may, for example, be generated in outside plano surface 62, opposite to surface 72, which faces the liquid crystal material, by ion etching.

To form pattern 66, well known photolithographic practice, as used in forming microcircuitry, is employed. Thus, a photoresist is first applied over plano surface 62. This photoresist is then covered with a grating photo mask in which the individual patterns are located to match the pixel pitch on the transistor plane of the LCD.

The photoresist is then exposed through the photo mask to selectively develop the pattern of the mask in the photoresist layer. This exposes corresponding portions of underlying plano glass surface 62. The exposed portions of surface 62 are then etched, for example, by reactive ion etching to a desired depth to form annular surfaces 68. If one desires a more efficient grating, each step in the pattern is subdivided into smaller steps by additional photolithography and etching operations.

The resulting structure is shown in FIGURE 7 for two photoresist operations. FIGURE 7 is an enlarged, fragmented view in cross-section. It shows a single unit corresponding to a surface 68 and an adjoining elevation 70 of FIGURE 6. The unit is subdivided to form two steps, or surfaces, 74 and 76 and adjoining elevation 78, as produced by successive photolithographic and etching steps.

Another procedure for forming a lens, or lens array, on a substrate is disclosed in United States Patent No. 4,776,868 (Trotter, Jr. et al.). That patent describes a method and apparatus wherein a vapor, which is solid and transparent at ambient temperature, is directed through a perforated mask onto the substrate. The vapor is so directed through the mask that it forms on the substrate a deposit having a curved surface.

A further method for forming a multilens array on an essentially alkali metal ion-free glass is described in a paper entitled "Fabrication and measurement of fused silica microlens arrays". This paper was delivered by K. Mersereau et al. at the SPIE International Symposium on Optical Applied Science and Engineering at San Diego, CA July 19-24, 1992.

The method described by Mersereau et al. contemplates applying a positive photoresist to a glass surface, exposing the photoresist-coated surface through a suitable mask and developing to provide an array of photoresist cylinders. The cylinders are then melted to form nearly spherical surfaces due to minimizing surface energy.

With the photoresist pattern thus established, the pattern is then transferred to the glass by reactive ion etching the total surface with a gas mixture balance designed to provide a 1:1 etch ratio of glass and photoresist. Once the photoresist is completely removed, the desired glass microlens array pattern remains.

It is important to note that the methods used to form multilens arrays on glasses essentially free of alkali metal ions can also be applied to glasses containing alkali metal ions. In this case, a barrier layer for alkali must be deposited on the surface of the glass which is coated with a transparent conductor. The barrier is placed between the glass surface and the transparent conducting film as described above and shown in FIGURE 3.

## Claims

1. An integral cover glass for an LCD panel having an array of microlenses integral with the outside of its front face, whereby light is focused by each microlens to enhance light output from the panel.

2. A cover glass in accordance with claim 1 wherein the cover glass has a lens forming capability.

3. A cover glass in accordance with claim 1 wherein the cover glass is a photosensitive glass.

4. A cover glass in accordance with claim 1 wherein the cover glass is an ion-exchanged glass whereby the glass has a gradient refractive index.

5. A cover glass in accordance with claim 1 wherein each microlens in the array has a spherical shaped surface.

6. A cover glass in accordance with claim 1 wherein each microlens in the array is a pattern of diffractive gratings.

7. A cover glass in accordance with claim 6 wherein the pattern is composed of successive, stepped segments of annular surfaces.

8. A cover glass in accordance with claim 1 wherein the cover glass composition contains alkali metal oxide and has a barrier layer coating on the inside face whereby alkali metal ion migration from the glass is controlled.

9. A cover glass in accordance with claim 1 or 1 and 8 wherein the cover glass has an electroconductive coating on its inside face, or over the barrier layer.

10. An LCD panel having an integral cover glass in accordance with any one of the preceding claims and wherein the panel has a back cover glass with transistors formed over portions of the inside face of the back cover glass whereby open areas remain on the face and light rays are focused on such open areas by the microlenses.

*Fig. 1*

*Fig. 2*

*Fig. 3*

Fig. 4a

Fig. 4b

Fig. 4c

Fig. 5

Fig. 6

Fig. 7